# EUROPEAN PATENT SPECIFICATION

(11) **EP 4 219 018 B1**
(45) Date of publication and mention of the grant of the patent: **04.12.2024**
(21) Application number: 22382063.0
(22) Date of filing: 27.01.2022
(51) Int. Cl.: B03C 1/01, C02F 1/48

(54) **PROCESS FOR THE CONTINUOUS MAGNETIC REMOVAL OF MICROPLASTICS PRESENT IN AQUEOUS MATRICES**
VERFAHREN ZUR KONTINUIERLICHEN MAGNETISCHEN ENTFERNUNG VON IN WÄSSERIGEN MATRIZEN VORHANDENEN MIKROPLASTIKA
PROCEDE D'ELIMINATION MAGNETIQUE EN CONTINU DES MICROPLASTIQUES PRESENTS DANS LES MATRICES AQUEUSES

(43) Date of publication of application: 02.08.2023
(73) Proprietor: CAPTOPLASTIC, S.L., 28050 Madrid (ES); Universidad Autónoma de Madrid, 28049 Madrid (ES)
(72) Inventor: MUÑOZ GARCÍA, Macarena, E-28049 Madrid (ES); PARRA SÁNCHEZ, Raquel, E-28050 Madrid (ES); MARTÍNEZ DE PEDRO, Zahara, E-28049 Madrid (ES); CASAS DE PEDRO, José Antonio, E-28049 Madrid (ES)
(74) Representative: ABG Intellectual Property Law, S.L.

(56) References cited:
- WO-A1-2020/240069
- WO-A1-2021/261078
- US-A1- 2011 036 771
- US-A1- 2012 279 912
- US-A1- 2013 087 504

## Description

### Field of the Invention

The present invention relates to a process which allows the removal of microplastics present in aqueous streams by means of the immediate formation of microplastic/magnetic iron material aggregates as a result of the close contact favored in the throat of a Venturi device and the subsequent separation of the formed aggregates by applying a magnetic filter.

### Background of the Invention

The excellent properties of plastics, among which the easy molding, high mechanical and chemical resistance, and the low cost thereof stand out, have led to them being widely used both by industry and by society as a whole. Since the development of the first synthetic polymers in the mid 20th century, the production of these synthetic polymers has not stopped growing. In 2019, the global production of plastics reached 370 million tons (PlasticsEurope, 2020), and the manufacture of plastics is expected to double in the next twenty years (MacArthur, D.E. et al., The New Plastics Economy: Rethinking the Future of Plastics. World Economic Forum. (2016)). Although plastics are undeniably useful, the generation of plastic waste and the inadequate management thereof represent an important environmental problem.

The removal of plastic when said plastic is large-sized, is not problematic. However, plastic breaks up with use, generating small-sized pieces of plastic which are harder to remove, particularly when said pieces have a millimetric diameter. Microplastics, defined as plastic particles having a size less than 5 mm (Bergmann, M. et al., Marine Anthropogenic Litter (2015) Springer), are traces of plastic having a widespread presence in the environment. Microplastics have been found in practically all the ecosystems on Earth, including inland and marine water, sediments, air, and soils (Grbic, J. et al., Environmental Science and Technology Letters 6 (2019) 68-72). Accordingly, they are also present in organisms (Cole, M. et al., Nature Scientific Reports 4:4528 (2014) 1-8; Wieczorek, A.M. et al., Environmental Science and Technology 53 (2019) 5387-5396), fundamentally in aquatic organisms, so there is considerable concern for the potential damages that their presence may have both in humans and in fauna (Wright, S.L. et al., Environmental Science and Technology 51 (2017) 6634-6647; Cox, K.D. et al., Environmental Science and Technology 53 (2019) 7068-7074).

It is estimated that 80% of microplastics present in the ocean comes directly from rivers (Li, J. et al. Water Research 137 (2018) 362-374). In turn, rivers are the primary recipients of effluents from urban and industrial waste water treatment plants (WWTPs), which have been identified as important sources of introducing microplastics into the aquatic environment (Li, J. et al. Water Research 137 (2018) 362-374). In this aspect, the development of equipment which allows the treatment of microplastic-contaminated water represents an obviously relevant challenge.

On the other hand, to evaluate the true impact of microplastics and their distribution in the environment, as well as to develop a specific regulation in this field, it is essential to perform suitable quantification and characterization of these particles in the different aqueous matrices that may contain them (WWTP effluents, drinking water, rivers, lakes, reservoirs, and oceans, among others). Analysis of these particles is particularly complex given their highly heterogeneous size, shape, color, density, and chemical composition. In a recent review of the literature (Koelmans, A.A. et al. Water Research 155 (2019) 410-422), fifty papers that studied the presence of microplastics in inland waters and drinking water were analyzed. It was concluded that many of the papers could not be regarded as entirely reliable. The biggest challenge is with very small microplastics, i.e., those having a size less than 300 µm. For example, sampling with nets with a pore size of 80 µm instead of 330 µm gave rise to the determination of 250-fold higher concentrations (Dris, R. et al. Environmental Chemistry 12 (2015) 592-599). Considering the set of published studies about the presence of microplastics in inland waters, there is a clear need to develop an effective sampling system for the analysis of microplastics. In fact, the recent World Health Organization report entitled "Microplastics in drinking-water" (World Health Organization (2019) ISBN 978-92-4-151619-8) highlighted the development of methods for the sampling and analysis of microplastics as a needed priority in research.

Filtration or sifting is by far the most common method for separating microplastics from aqueous matrices (Prata, J.C. et al. Trends in Analytical Chemistry 110 (2019) 150-159). The pore size of the filter or of the sieve used varies greatly and will logically determine the size of the microplastics that it will be able to separate out. Even still, very small pore sizes are usually avoided since they lead to obstruction problems due to the presence of other solids in suspension in the water, and furthermore using very small pore sizes consumes a lot of time. Therefore, small pore sizes (0.45 - 100 µm) are normally only used in the analysis of particularly clean aqueous matrices such as groundwater and drinking water (Koelmans, A.A. et al. Water Research 155 (2019) 410-422). In that sense, Neston nets with a pore size of 333 µm, as well as plankton nets with a pore size of 100 µm, are most commonly used directly in sampling (Stock, F. et al. Trends in Analytical Chemistry 113 (2019) 84-92; Prata, J.C. et al. Trends in Analytical Chemistry 110 (2019) 150-159).

There are other less common methods for separating microplastics from aqueous matrices that furthermore allow the direct quantification thereof, such as electrostatic separators (Felising, S. et al. Environmental Pollution 234 (2018) 20-28) and flow cytometry (Sgier, L. et al. Nature Communication 7 (2016) 11587). Nevertheless, they require specialized equipment and long analysis times, in addition to entailing a high cost. And most importantly, they do not allow the microplastics to be characterized, but rather only allow the particles to be counted.

The development of microplastic sampling equipment based on the application of magnetic separation processes after coating the microplastics with magnetic nanoparticles shows promising potential. According to recent studies (ES 2 796 998 A1 and WO 2020/240069 A1 and Grbic, J. et al., Environmental Science and Technology Letters, 6 (2019) 68-72), the separation of microplastics from water is highly effective by means of the interaction thereof with magnetic nanoparticles and the subsequent application of a magnetic field regardless of the nature and size of the microplastics. This method has significant advantages with respect to conventional filtration methods, although it is well known in the state of the art that the use of magnetic nanoparticles for the separation of organic compounds requires a given contact time for the interaction to occur ((ES 2 796 998 A1 and WO 2020/240069 A1, Razali, S.Z. et al., IOP Conf. Series: Earth and Environmental Sciences, 596 (2020) 012052). In the specific case of microplastics, in addition to a contact time, the process requires a close interaction between the magnetic material and the microplastics, which limits the industrial scaling-up thereof. Therefore, the development of a system which allows the formation of aggregates to be achieved instantaneously to work with direct streams and with high water flow rates represents a significant breakthrough in this field.

The publication WO2021/261078A1 discloses an apparatus for magnetic separation that comprises a magnetic separation part. Said magnetic separation part includes a storage tank for storing water to be treated, a pH regulating part for regulating the pH value of the water to be treated, a magnetic particles adding part for adding magnetic particles to the water to be treated, a mixing part with which aggregates of microplastics and a magnetic fluid are formed, and a magnetic separation main part in which the aggregates are separated by means of magnetic force from the water to be treated. In the storage tank , the pH value of the water to be treated is regulated to 4-7 inclusive and the aggregates of the microplastics and the magnetic fluid are formed. In the magnetic separation main part, the aggregates are separated by means of magnetic force from the water to be treated.

In view of this background, the development of a system which allows the removal of microplastics present in aqueous streams regardless of their composition and size, in an efficient, fast, and cost-effective manner in aqueous matrices of a different nature by means of the instantaneous formation of aggregates would represent a crucial finding in this field, where the treatment or sampling of direct streams and with high water flow rates is clearly limited at present.

### Summary of the Invention

The inventors have unexpectedly discovered that the application of the Venturi effect unexpectedly gives rise to the instantaneous formation of microplastic/magnetic iron material aggregates when contacting a water stream containing microplastics with another water stream containing magnetic iron material particles. This discovery is particularly surprising since the Venturi effect is known for achieving a very intense mixing. Precisely because of the mixing intensity of the streams that are contacted with one another in the Venturi device, one skilled in the art would expect the particles present in both streams to collide, but at no time would the skilled person expect the stable attachment of the magnetic material particles to the microplastics under such conditions, but rather would expect them to disintegrate. This discovery can be applied both for the design of a treatment system which allows the microplastics to be removed from a contaminated aqueous stream, such as for sampling of the microplastics contained in an aqueous matrix or stream, such as for a microplastic analysis process.

As shown in the examples, the formation of microplastic/magnetic material aggregates in the Venturi device was virtually instantaneous and with a 100% yield. The system likewise proved to be highly efficient in the separation of microplastics in the magnetic filter regardless of the nature or size of said microplastics, with yields exceeding 76%, and in the recovery of magnetite, with yields exceeding 94%. The system for separating microplastics of the present invention is particularly advantageous with respect to other methods included in the state of the art since it entails a significant reduction in the time needed for achieving the separation of microplastics from a contaminated aqueous stream. An additional advantage of the process of the present invention is the simplicity of the required equipment and the low cost of the materials used. Lastly, the system has shown high reproducibility of the obtained results.

Therefore, the invention relates to a process for separating microplastics from an aqueous matrix, the process comprising:
a) providing an aqueous matrix comprising microplastics,
b) providing a suspension of magnetic iron material particles in water,
c) conducting the aqueous matrix of step a) through a Venturi device and contacting it with the suspension of magnetic material particles in water from step b) in the throat of the Venturi device to form microplastic/magnetic iron material particle aggregates,
d) separating the free magnetic iron material particles and the microplastic/magnetic iron material particle aggregates formed in step c) from the water by means of a magnetic filter.

### Description of Figures

Figure 1: Diagram of the Venturi device used, with the dimensions corresponding to the channeling and to the throat.
Figure 2: Particle size distribution of the magnetic iron mineral (magnetite) used in the examples.
Figure 3: An electron microscopy image of a polystyrene particle (left) and polystyrene/magnetite aggregates formed after passing through the Venturi (right).
Figure 4: Detail (0.1 µm resolution) of the electron microscopy image of a polystyrene particle (left) and polystyrene/magnetite aggregates formed after passing through the Venturi (right).
Figure 5: An electron microscopy image of a polyethylene particle (left) and polyethylene/magnetite aggregates formed after passing through the Venturi (right).
Figure 6: Detail (0.1 µm resolution) of the electron microscopy image of the polyethylene particle (left) and polyethylene/magnetite aggregates formed after passing through the Venturi (right).
Figure 7: An electron microscopy image of a polypropylene particle (left) and polypropylene/magnetite aggregates formed after passing through the Venturi (right).
Figure 8: Detail (0.1 µm resolution) of the electron microscopy image of a polypropylene particle (left) and polypropylene/magnetite aggregates formed after passing through the Venturi (right).
Figure 9: An electron microscopy image of a sand particle (left) and the sand particle after passing through the Venturi (right).

### Detailed Description of the Invention

The invention relates to a process for separating microplastics from an aqueous matrix, the process comprising:
a) providing an aqueous matrix comprising microplastics,
b) providing a suspension of magnetic iron material particles in water,
c) conducting the aqueous matrix of step a) through a Venturi device and contacting it with the suspension of magnetic material particles in water from step b) in the throat of the Venturi device to form microplastic/magnetic iron material particle aggregates,
d) separating the free magnetic iron material particles and the microplastic/magnetic iron material particle aggregates formed in step c) from the water by means of a magnetic filter.

The first step, step a), of the process is to provide an aqueous matrix comprising microplastics.

In the context of the present invention, the term "microplastic" or "microplastics" refers to a plastic material having an average diameter of less than 5 mm, preferably with an average diameter comprised in the range of 0.1 µm to 5 mm, more preferably in the range of 0.1 µm to 1 mm, even more preferably in the range of 0.1 µm to 500 µm, even more preferably from 100 µm to 250 µm. Measuring the size of microplastics involves the prior separation thereof from the aqueous matrix by means of vacuum filtration using a microporous membrane filter with a pore size of not more than 0.1 µm, and the subsequent drying thereof either at room temperature or in a drying oven at a temperature of not more than 100°C. The filter containing the microplastics is then analyzed by means of scanning electron microscopy, for example using the conditions described in the examples. The length and width of the microplastics are measured, and they are assigned the size of the largest dimension (length). The average diameter is defined as the average length of the microplastic particles (summation of lengths of the analyzed particles among the number of particles analyzed).

The microplastics can be formed by any plastic material, preferably synthetic organic polymers, such as polyethylene terephthalates (PET), polyethylenes (PE) including high-density polyethylenes (HDPE) and low-density polyethylenes (LDPE), polyvinyl chlorides (PVC), polypropylenes (PP), polystyrenes (PS), polycarbonates (PC), polyurethanes (PU), and combinations thereof.

"Polyethylene terephthalate" or "PET" is a polymer that can be obtained by means of a reaction of polycondensation between terephthalic acid and ethylene glycol. Polyethylene terephthalate has the following structure.

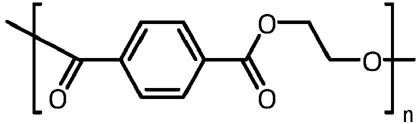

"Polyethylene" or "PE" refers to a polymer that can be obtained by the polymerization of ethylene. Polyethylene has the following structure.

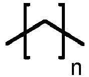

"High-density polyethylene" or "HDPE" refers to a polyethylene the density of which is comprised in the range of 0.930 to 0.970 g/mL. "Low-density polyethylene" or "LDPE" refers to a polyethylene the density of which is comprised in the range of 0.917 to 0.930 g/mL.

"Polyvinyl chloride" or "PVC" refers to a polymer that can be obtained by the polymerization of vinyl chloride. Polyvinyl chloride has the following structure.

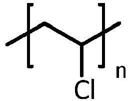

"Polypropylene" or "PP" refers to a polymer that can be obtained by the polymerization of propylene. Polypropylene has the following structure.

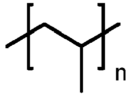

"Polystyrene" or "PS" refers to a polymer that can be obtained by the polymerization of styrene. Polystyrene has the following structure.

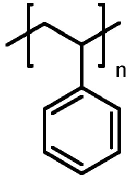

"Polycarbonate" or "PC" refers to a polymer comprising functional groups attached by carbonate groups (-O-C=O)-O-), such as for example diallyl diethylene glycol polycarbonate, or the most widely known, bisphenol A polycarbonate, the structure of which is shown below.

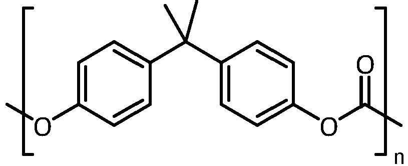

"Polyurethane" or "PU" refers to a polymer that can be obtained by the condensation of polyols, among which ethylene glycol and propylene glycol stand out, and polyisocyanates, among which methylene diphenyl diisocyanate (MDI) and the toluene diisocyanate (TDI) stand out, giving rise to urethane groups (-NH-(C=O)-O-) in the structure of the polymer. There is a wide range of polyurethanes due to the range of polyisocyanates and polyols that can be used to form them.

In a preferred embodiment, the microplastic is selected from the group consisting of polystyrene, polyethylene including high-density and low-density polyethylene, polyethylene terephthalate, polyvinyl chloride, polycarbonate, polyurethane, and mixtures thereof; more preferably polystyrene, polyethylene including high-density and low-density polyethylene, polypropylene, polyethylene terephthalate, and a mixture thereof; even more preferably, polystyrene, polyethylene including high-density and low-density polyethylene, polypropylene, and a mixture thereof; even more preferably, polystyrene, polypropylene, and a mixture thereof; most preferably polystyrene. An advantage of the process of the invention is its universal character because magnetic separation is effective regardless of the chemical nature of the microplastic.

The expression "aqueous matrix" refers to a composition containing water as its major component, preferably containing at least 80% by weight of water with respect to the total weight of the composition, more preferably at least 85%, even more preferably at least 90%, even more preferably at least 95%. The aqueous matrix may furthermore contain other substances that are already dissolved (for example, salts such as NaCl) or in suspension. Particularly, the aqueous matrix is selected from the group consisting of wastewater (including domestic, urban, industrial, agricultural, and livestock farming wastewater), sea water, river water, lake water, groundwater, tap water, or a mixture thereof. Therefore, wastewater purification plants, drinking water treatment plants, the agri-food industry (for example fish farms), sources of water for human consumption, water facilities for recreational purposes (for example, swimming pools), among others, are facilities of interest for the application of the process described in the present invention. The aqueous matrices comprise microplastics and may further comprise non-plastic organic particles. Optionally, the aqueous matrices may further comprise inorganic particles. Therefore, in one embodiment the aqueous matrix comprises microplastics and non-plastic organic particles. In another embodiment, the aqueous matrix comprises microplastics, non-plastic organic particles, and inorganic particles.

The expression "non-plastic organic particles" or "non-plastic organic solid particles" refers to particles which can have any shape and the average diameter of which is in the range of 0.1 µm to 1 cm, preferably from 0.1 µm to 5 mm, 0.1 µm to 5 mm, preferably from 0.1 µm to 1 mm, more preferably from 0.1 µm to 500 µm, even more preferably from 100 µm to 500 µm, even more preferably from 100 µm to 250 µm and which are not made of a plastic material, with the average diameter being the average length (summation of lengths of the analyzed particles among the number of analyzed particles) and the length being the largest dimension of each particle. Examples of plastics are the same as those described for microplastics. Examples of non-plastic (organic) material particles are of a plant origin (leaves, branches, seeds, fruits, etc.), an animal origin (bones, microcrustaceans, larvae, animal remains, etc.), a fungal origin, etc. The size of the particles can be determined the same way as described for microplastics.

The expression "inorganic particles" or "inorganic solid particles" refers to particles which can have any shape and the average diameter of which is in the range of 0.1 µm to 1 cm, preferably from 0.1 µm to 5 mm, 0.1 µm to 5 mm, preferably from 0.1 µm to 1 mm, more preferably from 0.1 µm to 500 µm, even more preferably from 100 µm to 500 µm, even more preferably from 100 µm to 250 µm, and of a mineral origin, with the average diameter being the average length (summation of lengths of the analyzed particles among the number of analyzed particles) and the length being the largest dimension of each particle. Examples of inorganic particles are sands, clays, insoluble salts, metal oxides, etc. The size of the particles can be determined the same way as described for microplastics.

In a particular embodiment, the size of the non-plastic organic particles and of the inorganic particles is in the same range as the size of the microplastics, preferably all of them have an average diameter of 100 µm to 250 µm.

Preferably, the pH of the aqueous matrix must be between 1 and 13, more preferably between 2 and 12, more preferably between 3 and 10, more preferably between 5 and 9, even more preferably between 6 and 8, most preferably about 7. The pH of the aqueous matrix can be conditioned by adding a base, such as for example, sodium hydroxide, potassium hydroxide, or sodium carbonate, among others, or an acid, such as for example, nitric acid, hydrochloric acid, or sulfuric acid, among others, until reaching a pH value within the previously defined range. The pH can be determined by means of a pH-meter.

The process of the present invention allows the separation of microplastics regardless of the electrical conductivity of the water. It is effective both for waters with low levels of conductivity, less than 0.05 µS/cm, and for saline waters with high levels of conductivity, of 50 mS/cm. The term "electrical conductivity" refers to the capacity of any substance to allow an electric current to pass through same. Electrical conductivity can be determining by means of a conductivity meter.

Preferably, the concentration of solid particles, including microplastics, in suspension of the aqueous matrix must be between 0.1 and 10000 mg/L, more preferably between 1 and 1000 mg/L, even more preferably between 10 and 100 mg/L. The solid particles in suspension can be determining using processes known to one skilled in the art, such as for example gravimetric methods based on retaining solid particles in a glass fiber filter ("Standard methods for the examination of water and wastewater", "2540 Solids" (APHA, AWWA, WPCF, 1992); Standard UNE-IN 872:2006 Water quality. Determination of suspended solids. Method by filtration through glass fiber filters).

The solid particles, including microplastics, present in the aqueous matrix will preferably be determined as the amount and composition thereof helps to determine the amount of magnetic iron material, preferably magnetite, to be added in step b).

The concentration of microplastics in suspension in the aqueous matrix must preferably be between 0.1 and 10000 mg/L, more preferably between 1 and 1000 mg/L, even more preferably between 10 and 100 mg/L.

The process of the invention requires providing in step a) an aqueous matrix comprising microplastics. The aqueous matrix is provided continuously in step a) of the process of the invention. The flow rate of the aqueous matrix provided is preferably from 0.01 to 1000 L/s, preferably from 0.01 to 100 L/s, even more preferably from 0.01 to 10 L/s, even more preferably from 300 to 600 L/h, even more preferably from 400 to 500 L/h.

Step b) is providing a suspension of magnetic iron material particles in water.

The term "magnetic iron material" refers to any natural or synthetic solid substance, comprising at least one iron species and having magnetic properties, i.e., it is attracted by a magnet. In a preferred embodiment, the magnetic iron material is inorganic. In a particular embodiment, the magnetic iron material is not coated, i.e., they are bare magnetic material particles. Preferably, the magnetic iron material has a magnetic saturation between 5 and 100 emu/g (between 5·10³ and 10⁵ A/m), more preferably between 30 and 90 emu/g (between 30·10³ and 90·10³ A/m), even more preferably between 65 and 90 emu/g (between 65·10³ and 90·10³ A/m), most preferably between 70 and 90 emu/g (between 70·10³ and 90·10³ A/m). The magnetic properties of the magnetic iron material can be determined using a magnetometer with a SQUID (superconducting quantum interference device) sensor. The magnetization (M) of the magnetic iron material is measured depending on the external magnetic field applied (H) in the range of -10000 to 10000 Oe (which is equivalent to -797700 to 797700 A/m) at room temperature. The magnetic saturation value of the material is that value of M reached when any subsequent increase in H does not cause an increase in the magnetization of the material. Preferably, the iron material has an iron content of at least 10% by weight with respect to the total weight of the material, preferably at least 20% by weight, more preferably at least 25% by weight, even more preferably at least 30% by weight, even more preferably at least 35% by weight, even more preferably at least 40% by weight, even more preferably at least 45% by weight, even more preferably at least 50% by weight, even more preferably at least 55% by weight, even more preferably at least 60% by weight, even more preferably at least 65% by weight. The percentage of iron can be determined using a total reflection x-ray fluorescence (TXRF) spectrometer using the method described in the examples.

Preferably, the magnetic iron material comprises an iron species selected from the group consisting of Fe(II), Fe(III), metallic Fe, and a mixture thereof. One example would be magnetic iron minerals, such as magnetite (formed by ferrous-diferric oxide FeO·Fe₂O₃, sometimes formulated as Fe₃O₄), maghemite (γ-Fe₂O₃), ilmenite (FeTiOs) and pyrrhotite (Fe_{0,8-1}S), among others. In a preferred embodiment, the magnetic iron material is the mineral magnetite.

The use of magnetic iron minerals, particularly magnetite, is advantageous from the economic and environmental viewpoint because they are materials that are abundant, environmentally-friendly, and readily separated from the aqueous matrices.

The magnetic iron material is in the form of particles. The term "particle" refers to the magnetic iron mineral being in the form of powder or granules with an average diameter of less than 5 mm, preferably the average diameter of which is comprised between 0.05 µm and 5 mm, more preferably between 0.05 µm and 1 mm, even more preferably between 0.05 µm and 500 µm, even more preferably between 0.05 µm and 100 µm, even more preferably between 0.1 µm and 10 µm, even more preferably between 0.1 µm and 5 µm, even more preferably between 0.1 µm and 1 µm, even more preferably between 0.1 µm and 0.5 µm, most preferably between 0.1 µm and 0.3 µm. Preferably, the particle size distribution must be sufficiently narrow in the established size range. The determination of the magnetic iron material particle size and distribution can be performed by means of scanning electron microscopy, for example, using the conditions described in the examples. The length and width of the microplastics are measured, and they are assigned the size of the largest dimension (length). The average diameter is defined as the average length (summation of lengths of the analyzed particles among the number of analyzed particles), with the length being the largest dimension of each magnetic iron material particle. For the determination of the particle size distribution, it is appropriate to use the statistical values D10, D50, and D90, which intercept 10%, 50%, and 90% by volume of the accumulated particles. In the preferred range, D10 (which indicates that 10% by volume of the particles of the sample have a diameter smaller than this value) is less than or equal to 0.3 µm, D50 (which indicates that 50% by volume of the particles of the sample have a diameter smaller than this value, and it represents the mean grain size) is less than or equal to 0.50 µm, and D90 (which indicates that 90% by volume of the particles of the sample have a diameter smaller than this value) is less than or equal to 0.8 µm. In the most preferred range, D10 (which indicates that 10% by volume of the particles of the sample have a diameter smaller than this value) is less than or equal to 0.15 µm, D50 (which indicates that 50% by volume of the particles of the sample have a diameter smaller than this value, and it represents the mean grain size) is less than or equal to 0.20 µm, and D90 (which indicates that 90% by volume of the particles of the sample have a diameter smaller than this value) is less than or equal to 0.35 µm. The magnetic iron material particles can be obtained by means of grinding the material and later sieving in the size ranges described above. The size of the magnetic iron material particles refers to the average diameter of said particles determined in dry conditions, without considering the agglomeration of the magnetic material particles when suspended in an aqueous matrix.

The term "suspension of magnetic iron material" refers to the dosage of completely wet magnetic iron material, preferably magnetite, suspended in water. The magnetic iron material/water, preferably magnetite/water, mass ratio must be comprised between 1 mg/kg and 10 kg/kg, preferably 1 mg/kg and 1 kg/kg, more preferably 10 mg/kg and 100 g/kg, and most preferably 100 mg/kg and 10 g/kg. The suspension of the magnetic iron material, preferably magnetite, in water can be produced by any mixing process, from using propeller or turbine type mechanical stirrers, where due to the effect of rotation, the stirring speed will keep the magnetic iron material particles, preferably magnetite, in suspension, to using rotary or piston pumps in which the speed of the propelled water will generate a balance of forces between friction with the water and the weight of the particle, which means that the particle is not deposited in the container, settling there, so the particle is kept suspended in water.

In particular, the suspension of magnetic iron material particles of step b) has a concentration of magnetic iron material particles of 0.1 to 1000 g/L, preferably from 1 to 100 g/L, even more preferably from 5 to 20 g/L, even more preferably 10 g/L.

The process of the invention requires providing in step b) a suspension of magnetic material particles in water. This suspension is provided continuously in step b) of the process of the invention. The flow rate of the suspension provided is preferably from 0.001 to 100 L/s, preferably from 0.001 to 10 L/s, preferably from 0.001 to 1 L/s, even more preferably from 5 to 50 L/h, even more preferably from 10 to 30 Uh.

Step c) is conducting the aqueous matrix of step a) through a Venturi device and contacting it with the suspension of magnetic material particles in water from step b) in the throat of the Venturi device to form microplastic/magnetic iron material particle aggregates. This step involves the incorporation of magnetic iron material particles to the aqueous matrix initially provided to form aggregates between the microplastics and the magnetic iron material particles.

The terms "microplastic/magnetic iron material particle aggregates" or "microplastic/magnetic iron material aggregates" refer to a cluster of particles formed by the microplastics and the magnetic iron material particles due to the interaction occurring between them.

The concentration of magnetic iron material in the throat of the Venturi when the aqueous matrix of step a) and the suspension of step b) have been mixed in step c), must be comprised between 1 mg/L and 100 g/L, preferably 1 mg/L and 10 g/L, more preferably 1 mg/L and 1 g/L, and more preferably between 10 mg/L and 100 mg/L. Preferably, the microplastic/magnetic iron material concentration ratio in the throat of the Venturi device is comprised between 1 mg microplastic/0.001 mg magnetic iron material and 1 mg microplastic/0.1 g magnetic iron material, preferably between 1 mg microplastic/0.01 mg magnetic iron material and 1 mg microplastic/100 mg magnetic iron material, and more preferably between 1 mg microplastic/0.1 mg magnetic iron material and 1 mg microplastic/10 mg magnetic iron material.

These mass ratios and concentrations can be achieved with the flow rates for providing the aqueous matrix of step a) and for providing the suspension of magnetic material of step b) defined above.

Step c), which is conducting the aqueous matrix of step a) through a Venturi device and contacting it with the suspension of magnetic material particles in water from step b) in the throat of the Venturi device to form microplastic/magnetic iron material particle aggregates, contemplates the use of a Venturi device which surprisingly achieves the instantaneous formation of microplastic/magnetic iron material aggregates.

The aqueous matrix of step a) and the suspension of magnetic material particles in water of step b) are transported in step c) with the same flow rates with which they have been provided in steps a) and b), respectively.

The term Venturi device, Venturi tube, Venturi, or Venturimeter refers to a pipe the diameter of which is initially reduced so as to later recover same, with a second pipe which allows utilizing the properties of the Venturi effect being connected at the point having the smallest diameter, that is, the throat. The decrease in section in the Venturi typically has an angle of 15° to 25°, and the recovery of the section is typically performed with an angle comprised between 5° and 15°. The angles must be smooth so as to avoid losses of energy in the fluid due to friction thereof against the walls of the Venturi. In particular, the reduction of the diameter of the pipe in the throat of the Venturi device is 75% to 99% of the diameter of the pipe before the throat (i.e., before the start of the decrease in section of the pipe), preferably from 80% to 95%, more preferably from 85% to 90%.

The Venturi effect is produced due to the conservation of both mass and energy. In the case of mass, the continuity equation (the mass flow rate entering a pipe is the same as that which exits the pipe) is applied, and for energy, the mechanical energy balance (formulated by Bernoulli, whereas the sum of the different forms that mechanical energy can have, that is, pressure, kinetic, or potential energy, must be conserved, i.e., one can be transformed into another) is applied. Therefore, when conducting a fluid through a pipe, if the section of the pipe decreases, the speed of the fluid increases, according to the continuity equation. The increased speed of the fluid leads to a drop in pressure, according to the energy balance defined by Bernoulli. This effect is referred to as the Venturi effect, the point of the fluid with the highest speed and, therefore, the lowest pressure in the narrowest area of the Venturi, also referred to as throat.

The use of a Venturi allows contacting the microplastics transported by the water, which would circulate through the main line of the Venturi, with the suspension of magnetic iron material particles fed by the line connected to the throat of the Venturi. At the mixing point (the point of lowest pressure and maximum speed referred to as the throat of the Venturi) where both streams come into contact, suitable conditions for the microplastic/magnetic iron material aggregates to be formed surprisingly arise despite the fact that the residence time at this point is extraordinarily short (less than 50 thousandths of a second, in particular less than 10 milliseconds, preferably between 5 and 10 milliseconds, more preferably about 7 milliseconds).

In particular, the design of the Venturi used is such that it provides in the throat a circulation with a Reynolds number (adimensional number that is typically used in fluid dynamics to characterize the rate of flow, Re=fluid speed* pipe diameter* fluid density divided by fluid viscosity) greater than 2100, preferably greater than 8200. The upper limit of this Reynolds value is that corresponding to a speed that gives rise to fluid cavitation.

In particular, no further mixing step is performed between steps c) and d).

Lastly, step d) for separating the free magnetic iron material particles and the microplastic/magnetic iron material particle aggregates of step c) from the water by means of a magnetic filter is performed.

Both the magnetic iron material particles, which, with the selected size, have magnetic properties, and the plastic/magnetic iron material particle aggregates, which also have these properties due to very presence of the magnetic iron material particles, are separated from the water by applying a magnetic field in what is referred to as a magnetic filter. The magnetic filter can have a different design provided that a very small distance between the system of magnets used in the filter and the microplastic/magnetic iron material aggregates present in the water is ensured.

The design of the magnetic filter can vary depending on the application of the separation system. For example, for sampling the microplastics in a water matrix, the magnetic filter may present a significant pressure drop given that the goal is for the microplastics not to get through. In this case, the number of magnetic bars forming the filter must be such that the distance between these bars assures the complete separation of the magnetic particles (magnetic iron material or microplastic/magnetic iron material aggregates) entrained by the water. The flow rate of the aqueous matrix for sampling microplastics will be relatively low and the filter may be taken apart to recover the retained magnetic particles for later analysis. For example, if the system is used for treating water containing microplastics to remove said microplastics, it is advantageous for the design of the filter not to present a high pressure drop against the circulation of the water, and for it to retain the maximum number of particles to avoid later treatments. In this case, taking apart the filter and completely recovering the retained magnetic particles are not necessary, but rather the filter may be washed in countercurrent with a high rate of flow of the water to entrain the magnetic particles retained in the magnets.

In a particular embodiment, the magnetic filter is a magnetic filter with bars. Magnetic filters with bars are formed by a set of magnetic bars with little separation between each bar, measuring 0.5 cm to 5 cm, on the surface of which the magnetic particles contained in the aqueous matrix (microplastic/magnetic iron material aggregates and the free magnetic iron material itself) are deposited.

The process of the invention is performed continuously, i.e., the water to be treated is not loaded in a batchwise manner into a tank, but rather is fed in continuously while the process is being performed.

Illustrative examples disclosing the features and advantages of the invention are described below; however, they must not be interpreted as being limiting of the object of the invention such as it is defined in the claims.

### Examples

### Materials and methods

### Determination of the microplastic particle size and shape

In the present invention, the microplastics were added to the aqueous matrices to subsequently carry out their magnetic separation by means of the process described in the specification. The particle size range of the microplastics was previously determined by means of sieving same using sieves of different sizes (5 mm, 1 mm, 500 µm, 250 µm, 100 µm, 50 µm, and 20 µm).

Measuring the size of microplastics in real aqueous matrices involves the prior separation thereof from the aqueous matrix by means of vacuum filtration using a microporous membrane filter with a pore size of not more than 0.1 µm, and the subsequent drying thereof either at room temperature or in a drying oven at a temperature of not more than 100°C. The filter containing the microplastics is then analyzed by means of light microscopy. In this case, a Nikon Eclipse Ci-S/Ci-L upright light microscope equipped with a DS-Fi2 digital camera and a DS-U3 control unit, with software for measuring and processing images (NIS-Elements L imaging) was used. A JEOL JSM 6335F scanning electron microscope, with 10X to 500.000X amplification was also used. The length and width of the microplastics are measured, and they are assigned the size of the largest dimension (length). The shape of the microplastics is analyzed by observing images of the particles at different magnifications.

### Determination of the composition of the microplastics

The composition of the microplastics was determined by means of Fourier transform infrared spectroscopy (FTIR). The samples of microplastics were analyzed following the conventional analysis method using KBr pellets. The pellets were prepared by adding 1 mg of a sample of microplastic and about 99 mg of KBr. The obtained powder mixture was compacted by applying 10 tons of pressure by means of a hydraulic press, obtaining the KBr pellets. The samples were then analyzed by means of the Spectrum Two spectrophotometer (Perkin Elmer). Transmission tests were performed in the spectral range of 4000 - 450 cm⁻¹. The obtained spectra were compared with library databases to determine the type of polymer that forms the microplastic using Perkin Elmer Spectrum Software.

### Determination of the magnetic iron material particle size

The magnetic iron material particle size (average diameter) and particle distribution were determined by means of the scanning electron microscopy analysis of the dry material. The equipment used was a JEOL JSM 6335F, with 10X to 500.000X amplification. The length and width of the magnetic iron material particles are measured, and they are assigned the size of the largest dimension (length). For the determination of the particle size distribution, it is appropriate to use the statistical values D10, D50, and D90, which intercept 10%, 50%, and 90% by volume of the accumulated particles.

### Determination of the percentage of iron

The iron content of the magnetic iron material was determined using a total reflection x-ray fluorescence (TXRF) spectrometer, namely the S2 Picofox (Bruker) model, with a molybdenum source. The method of preparation of the sample consisted of the open vessel digestion thereof using a solution of hydrochloric acid, nitric acid, and hydrofluoric acid at a proportion by volume of 6:2:0.5, at 105°C for 1.5 h. The concentration of material in the vessel was 1000 mg/L and a total volume of 10 mL was used. If necessary, the magnetic iron material was previously ground to a size less than 100 µm. Once the material sample was digested, an internal gallium standard was added in the solution for later quantification. A 3-µL aliquot of the resulting solution was introduced in the spectrometer for analysis, which was performed at 50 kV and 600 µA with an acquisition time of 500 s. The integration of the peak corresponding to the iron in the obtained spectrogram allowed determining the percentage of iron by weight contained in the material.

### X-ray diffraction

Powder x-ray diffraction (PXRD) was used to perform the identification and characterization of the crystalline phases present in the magnetic iron material. The samples were analyzed in an X'Pert PRO theta/theta diffractometer by Panalytical with a Cu tube (Kα radiation, 8.04 keV). The diffractometer has a secondary graphite monochromator and a Xe gas detector. A theta/2theta scan was performed with a 2θ range of 10 to 80°, an angular increment of 0.04° and an accumulation time of 4s. Prior to analysis, the magnetic iron material particles were ground, if necessary, to a size smaller than 100 µm. For the identification of the crystalline phases present in the obtained diffractograms, the High Score Plus software and the ICDD (International Centre for Diffraction Data) PDF-4 Full File crystallographic database were used

### Determination of magnetic saturation

The magnetic properties of the magnetic iron material were measured using a Quantum Design MPMS XL-5 magnetometer with a SQUID (superconducting quantum interference devices) sensor. If necessary, the magnetic iron material was previously ground to a size less than 100 µm. The magnetic moment (M) of the magnetic iron material was measured depending on the applied external magnetizing field (H) in the range of -10000 to 10000 Oe (equivalent to -797700 to 797700 A m⁻¹ in the SI) at room temperature. The magnetic saturation value is that value of M that is reached when any subsequent increase in H does not cause an increase in the magnetization of the material.

### Determination of particles in suspension

In general in this study, the determination of the particles in suspension was performed by means of the method described in standard UNE-IN 872 for the determination of particles in suspension using vacuum filtration. In that sense, a known volume of the aqueous matrix to be analyzed was filtered using an apparatus under a vacuum or low pressure through a glass fiber filter of known weight. Subsequently, the filter containing the retained particles was dried at 105°C, and the particle mass was determined by means of a weight difference with respect to the original filter. In the described examples, vacuum filtration was performed using a microporous membrane filter with a pore size of 0.45 µm. Next, the filter with the solids was dried in a drying oven for 2 h at 105°C. Once dry and cold, the filter containing the solids was weighed on a precision scale, and the mass of solids was determined by the weight difference with respect to the same filter before performing the separation process.

### Example 1. Formation of microplastic/magnetic iron material aggregates using a Venturi device

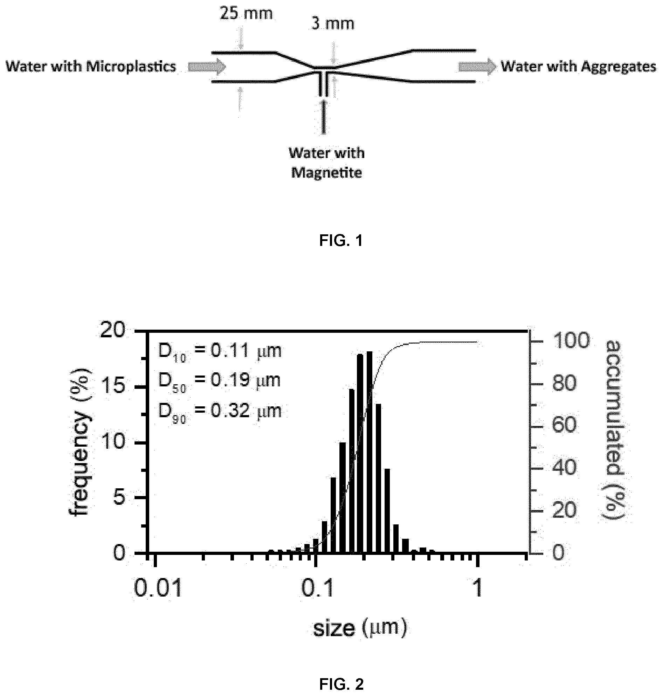

Experiments were performed to check for the formation of aggregates due to interaction between the microplastics present in an aqueous stream and the magnetic iron material (magnetite) particles fed in the form of a suspension through the throat of a Venturi device (Figure 1). The Venturi device used has a diameter of 25 mm at the inlet and 3 mm at the throat. The magnetite used was previously ground and had a mean particle diameter of 0.2 µm under dry conditions and a particle size distribution as shown in Figure 2. The crystalline character of the magnetite used was confirmed by means of x-ray diffraction analysis, which also showed that the only phase present in the solid is magnetite (Fe₃O₄). The percentage of magnetic iron mineral used was in the range of 68 - 78% by weight. In turn, the magnetic saturation value of the material was in the range of 70 to 90 emu/g, which corresponds with 70·10³ to 90·10³ A/m in SI units.

The experiments for the formation of microplastic/magnetic iron material aggregates in the Venturi device were performed using a water stream (main stream) containing a microplastic concentration of 20 mg/L. Tests were performed using three different microplastics with a similar mean particle diameter, comprised between 100 and 250 µm. The chosen microplastics were: polystyrene, polyethylene, and polypropylene. In all cases, the flow rate of the main water stream containing microplastics fed into the Venturi was 450 L/h. A conduit was connected at the throat of the Venturi device and as a result of the Venturi effect, it allowed the suctioning of a magnetite suspension (average diameter of 0.2 µm under dry conditions) which was kept under constant stirring in an attached 50 L tank. The concentration of the magnetite suspension was 10 g/L and the flow rate introduced through the throat of the Venturi device in all cases was 20 L/h. Under these conditions, the residence time of the water in the mixing area was about 7 milliseconds. The formation of aggregates at the outlet of the Venturi was observed in all cases. The formed aggregates were separated from the water by means of a magnetic filter with bars, namely, a commercial filter (Selter S.A.), formed by a stainless steel casing inside which there are arranged 6 neodymium bar magnets having a diameter of 1.8 cm and a length of 15 cm, with a 2 cm separation between said bars.

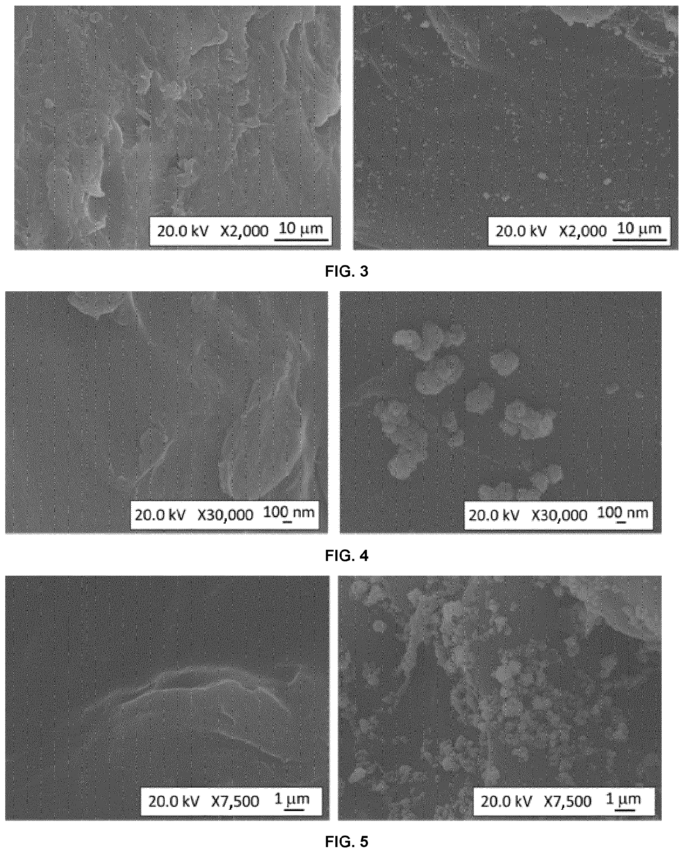

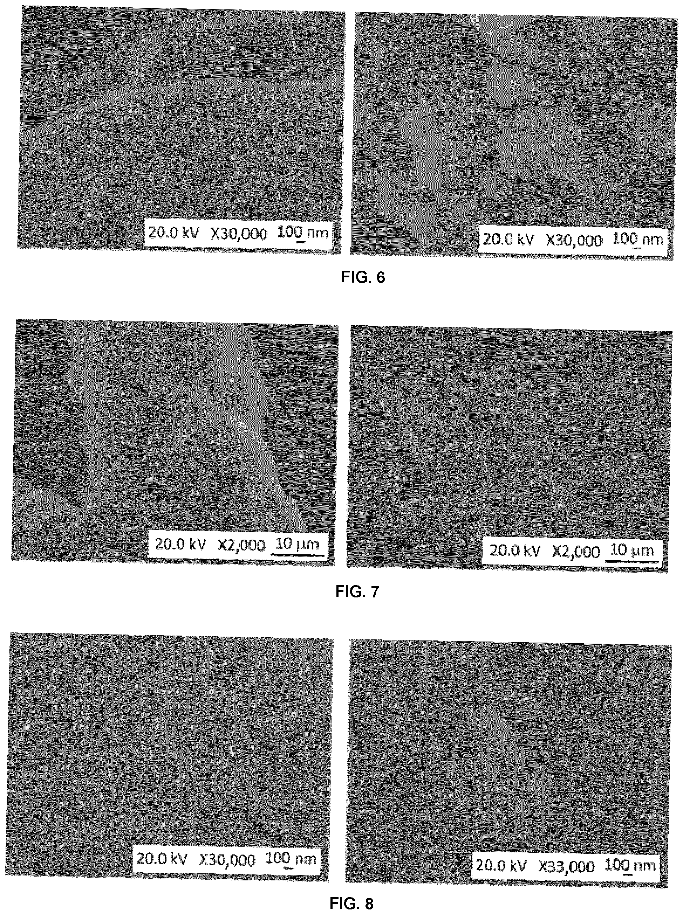

The plastics before going through the Venturi and the microplastic/magnetic iron material aggregates formed at the outlet of the Venturi were characterized by means of transmission electron microscopy (Figures 3 to 8). The effective formation of microplastic/magnetic iron material aggregates in the Venturi device was confirmed.

### Example 2. Yield in the separation of microplastic/magnetite aggregates formed by means of a Venturi system and separated from the water

Both for the purpose of developing an effective treatment process and for the purpose of using this technology as the basis for the design of a microplastic sampler, experiments were performed to check for the efficacy of the separation of the formed microplastic/magnetic iron material aggregates from the water using the Venturi device. The Venturi device used has a diameter of 25 mm at the inlet and 3 mm at the throat.

The experiments were performed using a water stream (main stream) containing a microplastic concentration of 15 mg/L. More unfavorable conditions than those used in Example 1 were selected to perform the tests, using a fraction of microplastics with a larger mean particle diameter, comprised between 1 mm and 500 µm, which reduces the outer surface/mass ratio of the microplastic. The chosen microplastics were, again: polystyrene, polyethylene, and polypropylene. The flow rate of the main water stream containing microplastics fed into the Venturi device was set between 350 and 425 Uh for the different tests. A conduit was connected at the throat of the Venturi device and as a result of the Venturi effect, it allowed the suctioning of a magnetite suspension (average diameter of 0.2 µm under dry conditions) which was kept under constant stirring in an attached 50 L tank. The concentration of the magnetite suspension was 10 g/L and the flow rate introduced ranged between 20 and 40 L/h, depending on the test. In this particular example, to retain the microplastic/magnetic iron material aggregates and free magnetic iron material in the water stream leaving the Venturi device, a commercial filter (Selter S.A.) formed by a stainless steel casing inside which there are arranged 6 neodymium bar magnets having a diameter of 1.8 cm and a length of 15 cm, with a 2 cm separation between said bars, was used. The obtained results, as well as the operating conditions used are included in Table 1.

Table 1. Experimental conditions and separation yield obtained in the separation of microplastics from the water using a Venturi device and a magnetic filter.

| Type of Plastic | Main water flow rate (L/h) | Magnetite suspension flow rate (L/h) | Microplastic separation yield (%) | Magnetite separation yield (%) |
|---|---|---|---|---|
| Polystyrene | 425 | 40 | 76 ± 5.6 | 97 ± 1.9 |
| Low-density polyethylene | 420 | 40 | 93 ± 3.3 | 98 ± 1.1 |
| Polypropylene | 350 | 20 | 83 ± 4.9 | 94 ± 3.3 |

The process used showed a highly efficient separation of microplastics with a mean particle diameter greater than 500 µm (and less than 1 mm). The yield in the separation of microplastic/magnetic iron material aggregates in the magnetic filter and, therefore, the yield in microplastic retention, was slightly lower than that of free magnetite particles due to the fact that said free magnetite particles have a larger magnetic field in relation to their size. The separation yield can be increased by optimizing the design of the magnetic filter used, which would improve efficacy in the separation of microplastic/magnetic iron material aggregates in the magnetic filter and, therefore, the yield in microplastic retention.

### Example 3. Non-formation of aggregates between inorganic particles (sand, silicon oxide) and magnetite using a Venturi system

Experiments were performed to check for the formation of aggregates due to interaction between grains of sand present in an aqueous stream and magnetic iron material (magnetite) particles fed in the form of a suspension through the throat of a Venturi device (Figure 2). The Venturi device used has a diameter of 25 mm at the inlet and 3 mm at the throat.

The experiments in the Venturi device were performed using a water stream (main stream) containing a concentration of sand in suspension (silicon oxide) of 20 mg/L with a mean particle diameter between 100 and 250 µm. The flow rate of the main water stream containing sand in suspension fed into the Venturi was 450 L/h. A conduit was connected at the throat of the Venturi device and as a result of the Venturi effect, it allowed the suctioning of a magnetite suspension (average diameter of 0.2 µm under dry conditions) which was kept under constant stirring in an attached 50 L tank. The concentration of the magnetite suspension was 10 g/L and the flow rate introduced through the throat of the Venturi device was 20 L/h in all cases. Under these conditions, the residence time of the water in the mixing area was about 7 milliseconds.

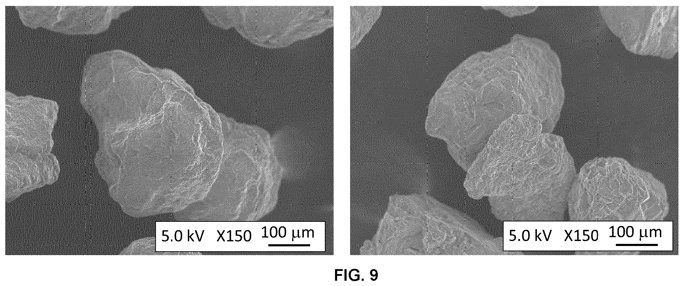

As can be seen in Figure 9, in this case, sand/magnetic iron material aggregates were not formed even after following the same operating conditions that were positive for microplastics.

## Claims

1. A process for separating microplastics from an aqueous matrix, the process comprising:
a) providing an aqueous matrix comprising microplastics,
b) providing a suspension of magnetic iron material particles in water,
c) conducting the aqueous matrix of step a) through a Venturi device and contacting it with the suspension of magnetic material particles in water from step b) in the throat of the Venturi device to form microplastic/magnetic iron material particle aggregates,
d) separating the free magnetic iron material particles and the microplastic/magnetic iron material particle aggregates from step c) by means of a magnetic filter.

2. The process according to claim 1, wherein the microplastics are selected from the group consisting of polystyrene (PS), polyethylene (PE) including high-density polyethylene (HDPE) and low-density polyethylene (LDPE), polypropylene (PP), polyethylene terephthalate (PET), polyvinyl chloride (PVC), polycarbonate (PC) and polyurethanes (PU), and mixtures thereof.

3. The process according to claim 2, wherein the microplastics are selected from the group consisting of polystyrene (PS), polyethylene (PE) including high-density polyethylene (HDPE) and low-density polyethylene (LDPE), polypropylene (PP), and a mixture thereof.

4. The process according to any of the preceding claims, wherein the average diameter of the microplastics is in the range of 0.1 µm to 500 µm.

5. The process according to any of the preceding claims, wherein the aqueous matrix of step a) is provided with a flow rate of 0.01 to 1000 L/s, preferably from 300 to 600 L/h.

6. The process according to any of the preceding claims, wherein the magnetic iron material comprises an iron species selected from the group consisting of Fe(II), Fe(III), metallic Fe, and a mixture thereof.

7. The process according to claim 6, wherein the magnetic iron material is magnetite.

8. The process according to any of the preceding claims, wherein the average diameter of the magnetic material is comprised between 0.05 µm and 100 µm.

9. The process according to claim 8, wherein the average diameter of the magnetic material is comprised between 0.1 µm and 10 µm.

10. The process according to any of the preceding claims, wherein the concentration of magnetic material in the suspension of step b) is from 1 mg/L to 100 g/L.

11. The process according to any of the preceding claims, wherein the suspension of step b) is provided with a flow rate of 0.001 to 100 L/s, preferably from 5 to 50 Uh.

12. The process according to any of the preceding claims, wherein the inlet flow rate of the aqueous matrix in the throat of the Venturi in step c) is from 0.01 to 1000 Us, preferably from 300 to 600 L/h, and/or the inlet flow rate of the suspension of magnetic particles in water in the throat of the Venturi in step c) is from 0.001 to 100 L/s, preferably from 5 to 50 L/h.

13. The process according to any of the preceding claims, wherein the diameter of the throat of the Venturi device represents a reduction of 75% to 99% with respect to the diameter of the pipe.

14. The process according to any of the preceding claims, wherein the magnetic filter of step d) is a magnetic filter with bars.

## Patentansprüche

1. Verfahren zur Abtrennung von Mikrokunststoffen aus einer wässrigen Matrix, wobei das Verfahren umfasst:
a) Bereitstellen einer wässrigen Matrix, die Mikrokunststoffe umfasst,
b) Bereitstellen einer Suspension von magnetischen Eisenmaterialpartikeln in Wasser,
c) Leiten der wässrigen Matrix aus Schritt a) durch eine Venturi-Vorrichtung und Inkontaktbringen mit der Suspension von magnetischen Materialpartikeln in Wasser aus Schritt b) im Hals der Venturi-Vorrichtung, um Mikrokunststoff-/magnetische Eisenmaterialpartikelaggregate zu bilden,
d) Abtrennen der freien magnetischen Eisenmaterialpartikel und der Mikrokunststoff-/ magnetischen Eisenmaterialpartikelaggregate aus Schritt c) mittels eines Magnetfilters.

2. Verfahren gemäß Anspruch 1, wobei die Mikrokunststoffe ausgewählt sind aus der Gruppe bestehend aus Polystyrol (PS), Polyethylen (PE) einschließlich Polyethylen hoher Dichte (HDPE) und Polyethylen niedriger Dichte (LDPE), Polypropylen (PP), Polyethylenterephthalat (PET), Polyvinylchlorid (PVC), Polycarbonat (PC) und Polyurethanen (PU) und Mischungen davon.

3. Verfahren gemäß Anspruch 2, wobei die Mikrokunststoffe ausgewählt sind aus der Gruppe bestehend aus Polystyrol (PS), Polyethylen (PE) einschließlich Polyethylen hoher Dichte (HDPE) und Polyethylen niedriger Dichte (LDPE), Polypropylen (PP) und einer Mischung davon.

4. Verfahren gemäß einem der vorhergehenden Ansprüche, wobei der mittlere Durchmesser der Mikrokunststoffe im Bereich von 0,1 µm bis 500 µm liegt.

5. Verfahren gemäß einem der vorhergehenden Ansprüche, wobei die wässrige Matrix aus Schritt a) mit einer Flussrate von 0,01 bis 1000 L/s, vorzugsweise von 300 bis 600 L/h, bereitgestellt wird.

6. Verfahren gemäß einem der vorhergehenden Ansprüche, wobei das magnetische Eisenmaterial eine Eisenspezies umfasst, die ausgewählt ist aus der Gruppe bestehend aus Fe(II), Fe(III), metallischem Fe und einer Mischung davon.

7. Verfahren gemäß Anspruch 6, wobei das magnetische Eisenmaterial Magnetit ist.

8. Verfahren gemäß einem der vorhergehenden Ansprüche, wobei der mittlere Durchmesser des magnetischen Materials zwischen 0,05 µm und 100 µm liegt.

9. Verfahren gemäß Anspruch 8, wobei der mittlere Durchmesser des magnetischen Materials zwischen 0,1 µm und 10 µm liegt.

10. Verfahren gemäß einem der vorhergehenden Ansprüche, wobei die Konzentration von magnetischem Material in der Suspension aus Schritt b) 1 mg/L bis 100 g/L beträgt.

11. Verfahren gemäß einem der vorhergehenden Ansprüche, wobei die Suspension aus Schritt b) mit einer Flussrate von 0,001 bis 100 L/s, vorzugsweise von 5 bis 50 L/h, bereitgestellt wird.

12. Verfahren gemäß einem der vorhergehenden Ansprüche, wobei die Einlassflussrate der wässrigen Matrix im Hals des Venturi in Schritt c) von 0,01 bis 1000 L/s, vorzugsweise von 300 bis 600 L/h, beträgt und/oder wobei die Einlassflussrate der Suspension von magnetischen Partikeln in Wasser im Hals des Venturi in Schritt c) von 0,001 bis 100 L/s, vorzugsweise von 5 bis 50 L/h, beträgt.

13. Verfahren gemäß einem der vorhergehenden Ansprüche, wobei der Durchmesser des Halses der Venturi-Vorrichtung eine Verringerung von 75 % bis 99 % in Bezug auf den Durchmesser des Rohrs darstellt.

14. Verfahren gemäß einem der vorhergehenden Ansprüche, wobei der Magnetfilter aus Schritt d) ein Magnetfilter mit Stäben ist.

## Revendications

1. Procédé de séparation des microplastiques d'une matrice aqueuse, le procédé comprenant :
a) fournir une matrice aqueuse comprenant des microplastiques,
b) fournir une suspension de particules d'un matériau de fer magnétique dans de l'eau,
c) conduire la matrice aqueuse de l'étape a) à travers un dispositif Venturi et la mettre en contact avec la suspension de particules de matériau magnétique dans l'eau de l'étape b) dans la gorge du dispositif Venturi pour former des agrégats de microplastique/particules de matériau de fer magnétique,
d) séparer les particules libres de matériau de fer magnétique et les agrégats de microplastique/ particules de matériau de fer magnétique de l'étape c) au moyen d'un filtre magnétique.

2. Procédé selon la revendication 1, dans lequel les microplastiques sont choisis dans le groupe constitué par le polystyrène (PS), le polyéthylène (PE), y compris le polyéthylène haute densité (PEHD) et le polyéthylène basse densité (PEBD), le polypropylène (PP), le polyéthylène téréphtalate (PET), le chlorure de polyvinyle (PVC), le polycarbonate (PC) et les polyuréthanes (PU), et leurs mélanges.

3. Procédé selon la revendication 2, dans lequel les microplastiques sont choisis dans le groupe constitué par le polystyrène (PS), le polyéthylène (PE), y compris le polyéthylène haute densité (HDPE) et le polyéthylène basse densité (LDPE), le polypropylène (PP), et un mélange de ceux-ci.

4. Procédé selon l'une quelconque des revendications précédentes, dans lequel le diamètre moyen des microplastiques se trouve dans l'intervalle de 0,1 µm à 500 µm.

5. Procédé selon l'une quelconque des revendications précédentes, dans lequel la matrice aqueuse de l'étape a) est fournie avec un débit de 0,01 à 1000 L/s, de préférence de 300 à 600 Uh.

6. Procédé selon l'une quelconque des revendications précédentes, dans lequel le matériau de fer magnétique comprend une espèce de fer choisie dans le groupe constitué par le Fe(II), le Fe(III), le Fe métallique et un mélange de ceux-ci.

7. Procédé selon la revendication 6, dans lequel le matériau de fer magnétique est la magnétite.

8. Procédé selon l'une quelconque des revendications précédentes, dans lequel le diamètre moyen du matériau magnétique est compris entre 0,05 µm et 100 µm.

9. Procédé selon la revendication 8, dans lequel le diamètre moyen du matériau magnétique est compris entre 0,1 µm et 10 µm.

10. Procédé selon l'une quelconque des revendications précédentes, dans lequel la concentration de matériau magnétique dans la suspension de l'étape b) est de 1 mg/L à 100 g/L.

11. Procédé selon l'une quelconque des revendications précédentes, dans lequel la suspension de l'étape b) est fournie avec un débit de 0,001 à 100 L/s, de préférence de 5 à 50 Uh.

12. Procédé selon l'une quelconque des revendications précédentes, dans lequel le débit d'entrée de la matrice aqueuse dans la gorge du Venturi à l'étape c) est de 0,01 à 1000 L/s, de préférence de 300 à 600 L/h, et/ou le débit d'entrée de la suspension de particules magnétiques dans l'eau dans la gorge du Venturi à l'étape c) est de 0,001 à 100 L/s, de préférence de 5 à 50 Uh.

13. Procédé selon l'une quelconque des revendications précédentes, dans lequel le diamètre de la gorge du dispositif Venturi représente une réduction de 75% à 99% par rapport au diamètre du tuyau.

14. Procédé selon l'une des revendications précédentes, dans lequel le filtre magnétique de l'étape d) est un filtre à barreaux magnétiques.
